# EUROPEAN PATENT SPECIFICATION

(11) **EP 2 213 482 B1**
(45) Date of publication and mention of the grant of the patent: **27.02.2013**
(21) Application number: 08838659.4
(22) Date of filing: 01.09.2008
(51) Int. Cl.: B60C 11/04, B60C 11/13

(54) **PNEUMATIC TIRE**
LUFTREIFEN
PNEUMATIQUE

(30) Priority: 19.10.2007 JP 2007272938
(43) Date of publication of application: 04.08.2010
(73) Proprietor: Bridgestone Corporation, Tokyo 104-8340 (JP)
(72) Inventor: KIWAKI, Yukihiro, Kodaira-shi Tokyo 187-8531 (JP)
(74) Representative: Waldren, Robin Michael
(86) International application number: PCT/JP2008/065687
(87) International publication number: WO 2009/050949

(56) References cited:
- EP-A1- 1 498 288
- EP-A1- 1 541 381
- JP-A- 4 201 607
- JP-A- 11 099 809
- JP-A- 2000 238 510
- JP-A- 2004 155 416
- JP-A- 2007 237 805
- JP-T- 2003 503 266

## Description

### Technical Field

The present invention relates to a pneumatic tire and, in particular, a pneumatic tire capable of ensuring good braking performance by an edge effect.

### Prior Art

A conventional pneumatic tire has a structure in which plural blocks are formed by arranging plural circumferential main grooves, as well as lug grooves extending substantially in the width direction, in a tread to generate an edge effect to ensure good braking performance (for example, see JP 09-328003). EP1498288 describes a known pneumatic tire.

### Disclosure of the Invention

### Problems to be solved by the Invention

However, in a pneumatic tire employing such an arrangement of grooves as described above, there is a problem that, although block edges thereof effectively work to demonstrate sufficient braking performance on a what is called "low µ road" having a relatively small friction coefficient such as a wet road surface, lug-groove edge portions on the trailing side of blocks are deformed upward or toward the radially inner direction (such deformation of edge portions will be referred to "upward deformation" hereinafter) due to frictions between the edge portions and a road surface when a relatively high force is inputted or on a dry road, whereby braking performance cannot be ensured in a satisfactory manner.

The present invention has been contrived to solve the aforementioned problem. An object of the present invention is to provide a pneumatic tire capable of ensuring good braking performance by making an edge effect be fully demonstrated by suppressing upward deformation of edge portions of a block. Another object of the present invention is to provide a pneumatic tire capable of decreasing rolling resistance. Means for solving the Problems

According to the present invention, there is provided a pneumatic tire as claimed in claim 1.

According to the pneumatic tire of the present invention, edges of the lug grooves on the trailing side the blocks effectively work in a low µ road such as a wet road surface as in a conventional pneumatic tire, whereby satisfactory braking performance can be demonstrated when a force is imputed in the tire circumferential direction, e.g. when brake is operated.

On the other hand, when a relatively high force is inputted or on a dry road, there may be cases where edge portions of the blocks on the lug groove side are deformed upward due to frictions between the edge portions and the road surface. However, since the ribs extending in the tire circumferential direction are provided each adjacent to the block rows constituted of plural block rows by way of the circumferential shallow grooves which are shallower than the circumferential main groove and these ribs work to suppress deformation of the blocks, it is possible to suppress upward deformation of the edge portions of the blocks on the lug groove side and make satisfactory braking performance be demonstrated when a relatively high force is inputted or on a dry road.

Further, when a force in the tire widthwise direction is inputted with respect to the tread, the blocks tend to deform in the tire widthwise direction. However, the ribs each adjacent to the blocks suppress such deformation in the tire widthwise direction of the blocks as described above. Accordingly, heat generation due to inner friction of rubber constituting the blocks is reduced and rolling resistance of the tire can be decreased, well contributing to lower fuel consumption rate of a vehicle.

According to the pneumatic tire of the present invention, it is possible to suppress upward deformation of edge portions of the blocks on the lug groove side even in quick acceleration.

Preferably, a groove width of the circumferential fine groove is set such that a side face of each block of the block rows is brought into contact with a side face of the rim in a state where the block and the rib are in contact with the ground and compression-deformed.

According to the pneumatic tire of the present invention with this preferable feature, edges of the blocks on the lug groove side effectively work in a low µ road such as a wet road surface as in a conventional pneumatic tire, whereby satisfactory braking performance can be demonstrated when a force is imputed in the tire circumferential direction, e.g. when brake is operated.

On the other hand, when a relatively high force is inputted or on a dry road, there may be cases where edge portions of the blocks on the lug groove side are deformed upwardly due to frictions between the edge portions and the road surface. However, when the blocks and the ribs are brought into contact with the ground, the blocks and the ribs are compression-deformed such that a side face of the block and a side face of the rib are in contact with each other, whereby the rib works to suppress deformation of the block. As a result, it is possible to suppress upward deformation of the edge portions of the blocks on the lug groove side and making satisfactory braking performance be demonstrated when a relatively high force is inputted or on a dry road.

Further, when a force in the tire widthwise direction is inputted with respect to the tread, the blocks tend to deform in the tire widthwise direction. However, the ribs each adjacent to the blocks suppress such deformation in the tire widthwise direction of the blocks as described above. Accordingly, heat generation due to inner friction of rubber constituting the blocks is reduced and rolling resistance of the tire can be decreased, well contributing to lower fuel consumption rate of a vehicle.
According to the pneumatic tire of the second aspect of the present invention, it is possible to suppress upward deformation of edge portions of the blocks on the lug groove side even in quick acceleration.

Preferably, the pneumatic tire is characterized in that an angle formed by each lug groove with respect to the tire widthwise direction, in a plan view of the tread, is in the range of 45° to 70° (inclusive of 45° and 70°).

Since an angle formed by each lug groove with respect to the tire widthwise direction, in a plan view of the tread, is set to be not smaller than 45 degrees, a force orthogonal to the edges, on the lug groove side, of the blocks demarcated by the lug grooves, exerted on the edges at braking or the like (e.g. an input force at braking), is made relatively small. As a result, it is possible to further suppress upward deformation of the edge portions of the blocks on the lug groove side and thus improve braking performance.

The upper limit of the angle formed by each lug groove with respect to the tire widthwise direction is preferably 70 degrees. In a case where the angle formed by each lug groove with respect to the tire widthwise direction exceeds 70 degrees, block rigidity decreases and thus deterioration in driving stability, partial wear and the like are resulted.

### Effect of the Invention

The pneumatic tire of claim 1 or 2 of the present invention having the aforementioned structure causes a superior effect of suppressing upward deformation of edge portions of blocks and making an edge effect be fully demonstrated to ensure good braking performance, as described above.

Further, the pneumatic tire of claim 1 or 2 has a superior effect of suppressing deformation of the blocks, thereby enabling to decrease rolling resistance of a tire and thus contributing to lower fuel consumption rate of a vehicle.

The pneumatic tire of the present invention as claimed in claim 3, having the aforementioned structure, has a superior effect of further improving braking performance.

### Brief Description of the Drawings

FIG. 1 (A) is a plan view of a tread of a pneumatic tire according to one embodiment of the present invention.
FIG. 1 (B) is a sectional view showing an outer contour of the tread cut along the tire rotational axis.
FIG. 2 is a sectional view of a circumferential shallow groove.
FIG. 3 is a plan view of a tread of a conventional pneumatic tire.

### Explanation of Reference Numerals

- 10: Pneumatic tire
- 12: Tread
- 14: First circumferential main groove
- 16: Center rib
- 18: Circumferential fine groove
- 20: Second circumferential groove
- 22: Center lug groove
- 24: Center block
- 26: Shoulder rib
- 28: Circumferential shallow groove
- 30: Shoulder lug groove
- 32: Shoulder block

### Best Mode for implementing the Invention

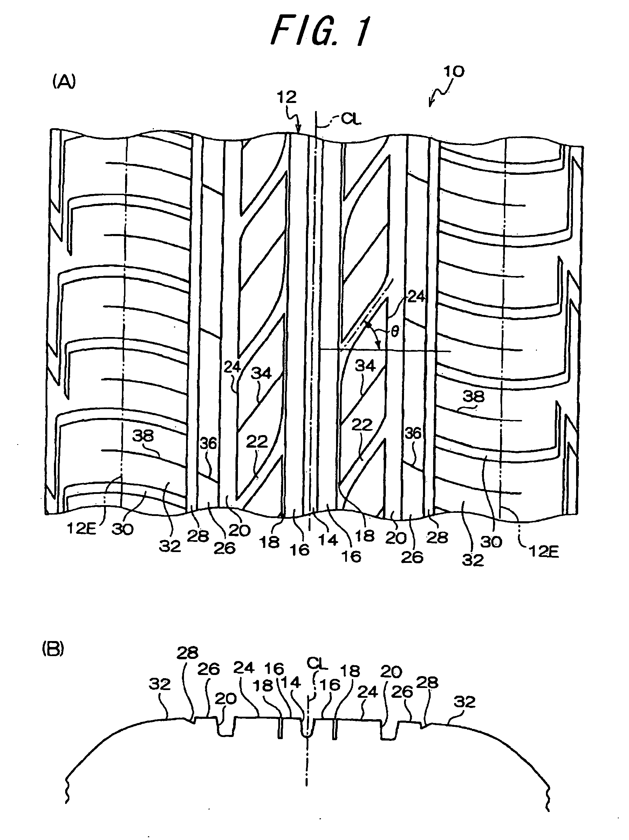

Hereinafter, an example of one embodiment of the present invention will be described in detail with reference to the drawings.
As shown in FIG. 1, a tread 12 of a pneumatic tire 10 of the present embodiment has a first circumferential main groove 14 provided on the tire equatorial plane CL to extend along the circumferential direction. A center rib 16 continuously extending along the tire circumferential direction is provided in each of land portion rows on the both sides in the tire widthwise direction of the first circumferential main groove 14.

Reference number 12E in FIG. 1 represents a ground contact end of the tread 12.
The ground contact end 12E represents a ground contact end in a case where the pneumatic tire 10 is assembled with a standard rim prescribed in JATMA YEAR BOOK (the standards by The Japan Automobile Tyre Manufacturers Association, Inc., 2007 edition) and the maximum load capacity is applied on the tire by inflating the tire at an internal pressure as 100% of the air pressure (the maximum air pressure) corresponding to the maximum load capacity (the load printed by bold letter in the internal pressure-load capacity correspondence table) in the application size ply rating in JATMA YEAR BOOK.
In a case where TRA standards or ETRTO standards are applied in a place where the tire is used or produced, appropriate standards should be used accordingly.

Circumferential fine grooves 18 extending along the tire circumferential direction are formed on the respective outer sides in the tire widthwise direction of the center rib 16. Further, second circumferential main grooves 20 extending in the tire circumferential direction are formed on the respective outer sides in the tire widthwise direction of the fine grooves 18.
A block row constituted of plural center blocks 24 is formed between each circumferential fine groove 18 and the corresponding second circumferential main groove 20 by providing plural center lug grooves 22 opening to both of the circumferential fine groove 18 and the second circumferential main groove 20 such that the center lug grooves extend slanted with respect to the tire widthwise direction.
The first circumferential main groove 14, the second circumferential main groove 20 and the center lug groove 22 have deepest depths in the tread 12 in order to ensure good drainage properties and the groove widths thereof are set, respectively, such that these grooves can avoid being closed when the tread is brought into contact with the ground.

The circumferential fine groove 18 has a narrower groove width than the first circumferential main groove 14 and the second circumferential main groove 20. The groove width of the circumferential fine groove 18 is set such that a side face of the center rib 16 is in contact with a side face of the center block 24 in a state where the tread 12 is in contact with the ground and the center rib 16 and the center block 24 are compression-deformed, respectively, as the tire is rotated with load exerted thereon.
The groove width of the fine groove 18 of the present embodiment is substantially constant from the groove bottom to the groove opening portion thereof on the tread surface side. The groove width of the fine groove 18 is preferably not larger than 1.0 mm. The depth of the fine groove 18 is preferably set within the range of 50 to 100 of the groove depths of the first circumferential main groove 14 and the second circumferential main groove 20.
The inclination angle θ of the center lug groove 22 with respect to the tire widthwise direction is preferably set within the range of 45 to 70 degrees.

Shoulder ribs 26 continuously extending along the tire circumferential direction are provided in the land portion rows on the respective outer sides in the tire widthwise direction of the second circumferential main grooves 20. Circumferential shallow grooves 28 extending in the tire circumferential direction are formed on the respective outer sides in the tire widthwise direction of the shoulder ribs 26.
As shown in FIG. 1(B), the groove depth of the circumferential shallow groove 28 is set to be shallower than those of the first circumferential main groove 14 and the second circumferential main groove 20. The groove depth of the circumferential shallow groove 28 is preferably set in the range of 20 to 50% of the groove depths of the first circumferential main groove 14 and the second circumferential main groove 20.

As shown in FIG. 1 (A), a block row constituted of plural shoulder blocks 32 is formed on the outer side in the tire widthwise direction of each shallow groove 28 by providing plural shoulder lug grooves 30 extending from the shallow groove 28 toward the outer side in the tire widthwise direction with spaces therebetween in the tire circumferential direction.

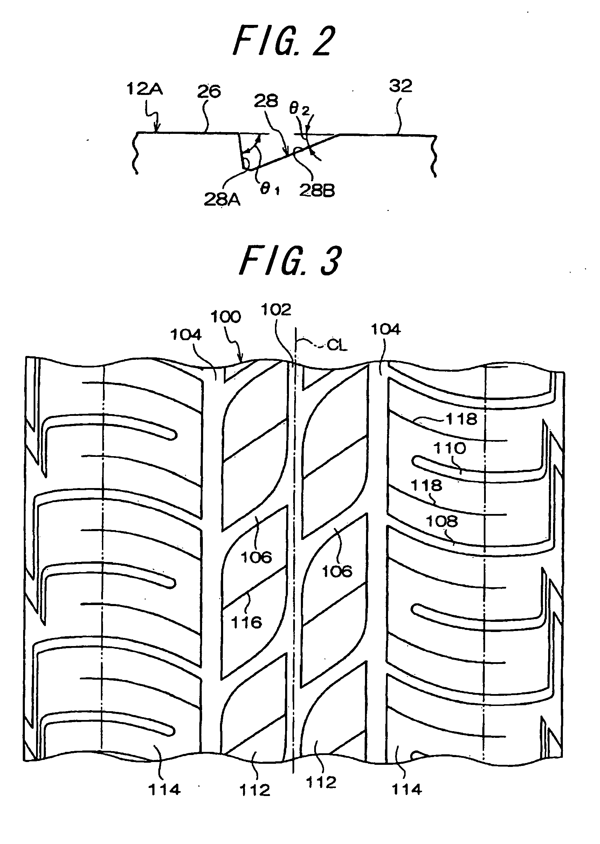

As shown in FIG. 2, a section of the circumferential shallow groove 28 of the present embodiment has a substantially V-like shape. An angle θ₁ formed by a groove wall face 28A on the shoulder rib 26 side with respect to the tread surface 12A is close to a right angle, and the groove wall face 28B on the shoulder block 32 side is designed such that an angle θ₂ formed by the groove wall face 28B with respect to the tread surface 12A is smaller than the angle angle θ₁ of the groove wall face 28A.

Sipes 34 are formed in the middle portion in the circumferential direction of each center block 24 such that the sipes 34 extend full across the block 24 with inclination in the same direction as the center lug grooves 22. Further, sipes 36 shallower than the first circumferential main groove 14 and the second circumferential main groove 20 are formed in each shoulder rib 26 with spaces therebetween in the tire circumferential direction such that the sipes 36 extend full across the shoulder rib 26. Yet further, sipes 38 substantially in parallel with the shoulder lug grooves 30 are formed in each shoulder block 32 in the intermediate portion thereof in the tire circumferential direction, e.g. the center portion thereof.
In the present invention, a "sipe" represents a groove which closes and the groove width thereof becomes zero when a tread is brought into contact with the ground.

### (Effect)

Next, an effect of the pneumatic tire 10 of the present embodiment will be described. According to the pneumatic tire 10 of the present embodiment, edges of the center blocks 24 on the lug groove side and edges of the shoulder blocks 32 on the lug groove side effectively work on a low µ road such as a wet road surface as in a conventional pneumatic tire, whereby satisfactory braking performance can be demonstrated.

On the other hand, when a relatively high force is inputted or on a dry road, there may be cases where edge portions of the blocks on the lug groove side are deformed upwardly due to frictions between the edge portions and the road surface. However, in these cases, the center block 24 is adjacent to the corresponding center rib 16 and the shoulder blocks 32 are adjacent to the corresponding shoulder rib 26, so that the center rib 16 works to suppress deformation of the corresponding center block 24 and the shoulder rib 26 works to suppress deformation of the shoulder block 32, whereby it is possible to suppress upward deformation of the edge portions of the blocks on the lug groove side and make satisfactory braking performance be demonstrated when a relatively high force is inputted or on a dry road.

Further, since the inclination angle θ of each center lug groove 22 with respect to the tire widthwise direction is set in the range of 45 to 70 degrees, a force orthogonal to the edges on the lug groove side of the center blocks 24 demarcated by the lug grooves 22, which force is exerted on these edges at braking or the like (e.g. an input force at braking), is made relatively small, whereby it is possible to further suppress upward deformation of the edge portions of the blocks on the lug groove side and improve braking performance.

In a case where the inclination angle θ formed by each center lug groove 22 with respect to the tire widthwise direction is smaller than 45 degrees, it is difficult to improve braking performance.
In a case where the inclination angle θ formed by each center lug groove 22 with respect to the tire widthwise direction exceeds 70 degrees, rigidity of the center blocks 24 decreases and thus deterioration in driving stability, partial wear and the like may be resulted.

Further, when a force in the tire widthwise direction is inputted with respect to the tread 12, for example, in a cornering situation, an input of force is largest at the shoulder block 32 on the outer side in the comering-radial direction of a vehicle and thus this shoulder block 32 tends to deform on the inner side in the tire widthwise direction (i.e. on the side of the tire equatorial plane). However, the shoulder rib 26 adjacent, on the inner side in the tire widthwise direction, to the shoulder block 32 suppresses deformation of the shoulder block 32 toward the inner side in the tire widthwise direction, whereby heat generation due to inner friction of rubber constituting the shoulder blocks 32 is reduced and rolling resistance of the tire can be decreased, well contributing to lower fuel consumption rate of the vehicle.

Yet further, in the center blocks 24 disposed on the sides near to the tread center, the center rib 16 suppresses deformation of the center blocks 24 in the tire widthwise direction, whereby heat generation of the center block 24 can be reduced, contributing to lower fuel consumption rate of the vehicle.
Yet further, according to the pneumatic tire 10 of the present embodiment, it is possible to suppress upward deformation of the lug groove-side edge portions of the center blocks 24 and the shoulder blocks 32, on the leading side, in quick acceleration, as well.

### [Another embodiment]

Although the section of the circumferential shallow groove 28 has a substantially V-like shape in the foregoing embodiment, the sectional shape of the shallow groove 28 may be other than a V-like shape, as long as the shoulder rib 26 can suppress deformation of the shoulder block 32.

### (Examples)

In order to confirm an effect of the present invention, there were prepared as test tires a conventional pneumatic tire and a pneumatic tire according to the aforementioned embodiment of the present invention, to which the present invention was applied. Braking performance on a wet road surface, braking performance on a dry road surface and rolling resistance were tested/measurement for the respective test tires.
The results of the tests/measurement are shown in Table 1.
Pneumatic tire according to the embodiment of the present invention (which will be referred to as an "embodiment tire" hereinafter): a pneumatic tire having such a tread pattern as described in the aforementioned embodiment
Conventional pneumatic tire: a pneumatic tire having a tread pattern as shown in FIG. 3
In FIG. 3, reference number 100 represents a tread, 102 and 104 each represent a circumferential main groove, 106, 108 and 110 each represent a lug groove, 112 and 114 each represent a block, and 116 and 118 each represent a sipe. The circumferential main grooves 102, 104 have the same groove depths and widths as those of the circumferential grooves of the embodiment of the present invention.

The respective test tires were summer tires each having size of 195/65R15. Each of the test tires was assembled with a rim having a rim width 6J-15, mounted on a Japanese sedan-type passenger car, inflated to reach the internal pressure specified for the vehicle under a load condition of (driver's weight + 600N), and subjected to the tests.

In the braking test, deceleration from 100 km/h was measured in a state in which the ABS function was in operation.
For evaluation, deceleration of each test tire is expressed as an index value relative to the deceleration in a case where the conventional pneumatic tire was mounted on the vehicle, which is expressed as 100. The larger index value represents the larger deceleration and thus the better braking performance.

Further, rolling resistance was measured by a tester as rolling resistance when each test tire was rotated in the same conditions as described above.
For evaluation, the reciprocal of the rolling resistance value of each test tire was expressed as an index value relative to the reciprocal of the rolling resistance of the conventional pneumatic tire, which reciprocal is expressed as 100. The larger index value represents the smaller rolling resistance.

**[Table 1]**

| | Conventional pneumatic tire | Embodiment pneumatic tire |
|---|---|---|
| Braking performance (wet road surface) | 100 | 101 |
| Braking performance (dry road surface) | 100 | 105 |
| Rolling resistance | 100 | 105 |

From the results of the tests, it is understood that the embodiment tire to which the present invention is applied exhibits significantly improved braking performance on a dry road surface and significantly reduced rolling resistance, as compared with the conventional pneumatic tire.

## Claims

1. A pneumatic tire including in a tread structure plural circumferential main grooves (14, 20) extending in the tire circumferential direction and plural lug grooves (22, 30) provided in a land portion row between two adjacent circumferential main grooves (14, 20) and a land portion row between each outermost circumferential main groove (20) and a corresponding ground contact end (12E) of the tread, each lug groove extending in a direction intersecting the circumferential main grooves, comprising in the tread structure:
a circumferential shallow groove (18, 28) provided within one land portion row so as to be proximate to one circumferential main groove (14, 20) and shallower than the one circumferential main groove;
a rib (16, 26) formed in the one land portion between the one circumferential main groove (14, 20) and the circumferential shallow groove (18, 28) and extending in the tire circumferential direction,
wherein the remaining portion of the one land portion row other than the rib is structured as block rows constituted of plural blocks (24, 32), **characterised in that**
each shoulder rib (26) formed in each land portion row between each outermost circumferential main groove (20) and the corresponding ground contact end (12E) of the tread is provided with sipes (36), the sipes (36) being formed with spaces therebetween in the tire circumferential direction such that the sipes (36) extend full across the shoulder rib (26).

2. A pneumatic tire of claim 1, wherein a circumferential fine groove is provided within one land portion row so as to be proximate to one cicumferential main groove and marrower than the one circumferential main groove and a groove width of the circumferential fine groove is set such that a side face of each block of the block rows is brought into contact with a side face of the rib in a state where the block and the rib are in contact with the ground and compression-deformed.

3. The pneumatic tire of claim 1 or 2, wherein an angle formed by each center lug groove (22) with respect to the tire widthwise direction, in a plan view of the tread, is in the range of 45° to 70°, inclusive of 45° and 70°.

4. The pneumatic ture of claim 1 or 2, wherein the tread structure is symmetrical about a point on the tire equatorial plane (CL).

## Patentansprüche

1. Luftreifen, der in einer Laufflächenstruktur mehrere periphere Hauptrillen (14, 20), die sich in der Reifenumfangsrichtung erstrecken, und mehrere Stollenrillen (22, 30) umfasst, die in einer Stegabschnittsreihe zwischen zwei benachbarten peripheren Hauptrillen (14, 20) und einer Stegabschnittsreihe zwischen einer jeden äußersten peripheren Hauptrille (20) und einem entsprechenden Reifenaufstandsende (12E) der Lauffläche vorhanden sind, wobei sich eine jede Stollenrille in einer Richtung erstreckt, die die peripheren Hauptrillen schneidet, wobei er in der Laufflächenstruktur aufweist:
eine periphere flache Rille (18, 28), die innerhalb einer Stegabschnittsreihe so vorhanden ist, dass sie sich an eine periphere Hauptrille (14, 20) annähert und flacher ist als eine periphere Hauptrille;
eine Rippe (16, 26), die in einem Stegabschnitt zwischen der einen peripheren Hauptrille (14, 20) und der peripheren flachen Rille (18, 28) ausgebildet ist und sich in der Reifenumfangsrichtung erstreckt,
wobei der verbleibende Abschnitt der einen Stegabschnittsreihe anders als die Rippe als Blockreihen strukturiert ist, die aus mehreren Blöcken (24, 32) gebildet werden, **dadurch gekennzeichnet, dass**
jede Schulterrippe (26), die in einer jeden Stegabschnittsreihe zwischen einer jeden äußersten peripheren Hauptrille (20) und dem entsprechenden Reifenaufstandsende (12E) der Lauffläche ausgebildet ist, mit Profilrillen (36) versehen ist, wobei die Profilrillen (36) mit Zwischenräumen dazwischen in der Reifenumfangsrichtung so ausgebildet sind, dass sich die Profilrillen (36) vollständig über die Schulterrippe (26) erstrecken.

2. Luftreifen nach Anspruch 1, bei dem eine periphere feine Rille innerhalb einer Stegabschnittsreihe so vorhanden ist, dass sie sich an eine periphere Hauptrille annähert und schmaler ist als die eine periphere Hauptrille, und bei dem eine Rillenbreite der peripheren feinen Rille so eingestellt ist, dass eine Seitenfläche eines jeden Blocks der Blockreihen in Kontakt mit einer Seitenfläche der Rippe in einen Zustand gebracht wird, wo der Block und die Rippe mit dem Erdboden in Kontakt sind und durch Druck verformt werden.

3. Luftreifen nach Anspruch 1 oder 2, bei dem ein Winkel, der durch jede mittlere Stollenrille (22) mit Bezugnahme auf die Reifenbreitenrichtung in einer Draufsicht der Lauffläche gebildet wird, im Bereich von 45° bis 70° liegt, inklusive 45° und 70°.

4. Luftreifen nach Anspruch 1 oder 2, bei dem die Laufflächenstruktur um einen Punkt in der Reifenäquatorebene (CL) symmetrisch ist.

## Revendications

1. Bandage pneumatique, englobant dans une structure de bande de roulement plusieurs rainures circonférentielles principales (14, 20), s'étendant dans la direction circonférentielle du bandage pneumatique, et plusieurs rainures à barrettes (22, 30) agencées dans une rangée de parties d'appui entre deux rainures circonférentielles principales adjacentes (14, 20) et une rangée de parties d'appui entre chaque rainure circonférentielle principale externe extrême (20) et une extrémité de contact au sol correspondante (12E) de la bande de roulement, chaque rainure à barrettes s'étendant dans une direction coupant les rainures circonférentielles principales, comprenant dans la structure de bande de roulement :
une rainure circonférentielle peu profonde (18, 28), agencée dans une rangée de parties d'appui, de sorte à être proche d'une rainure circonférentielle principale (14, 20), et moins profonde que ladite une rainure circonférentielle principale ;
une nervure (16, 26), formée dans ladite une partie d'appui entre ladite une rainure circonférentielle principale (14, 20) et la rainure circonférentielle peu profonde (18, 28), et s'étendant dans la direction circonférentielle du bandage pneumatique ;
la partie restante de ladite une rangée de parties d'appui, autre que la nervure, ayant la structure de rangées de pavés constituées par plusieurs pavés (24, 32), **caractérisé en ce que**
chaque nervure d'épaulement (26) formée dans chaque rangée de parties d'appui entre chaque rainure circonférentielle principale externe extrême (20) et l'extrémité de contact au sol correspondante (12E) de la bande de roulement, comporte des lamelles (36), les lamelles (36) comportant des espaces entre elles dans la direction circonférentielle du bandage pneumatique, de sorte que les lamelles (36) s'étendant complètement à travers la nervure d'épaulement (26).

2. Bandage pneumatique selon la revendication 1, dans lequel une rainure circonférentielle fine est agencée dans une rangée de parties d'appui, de sorte à être proche d'une rainure circonférentielle principale, et plus étroite que ladite une rainure circonférentielle principale, une largeur de rainure de la rainure circonférentielle fine étant ajustée de sorte qu'une face latérale de chaque pavé des rangées de pavés est mise en contact avec une face latérale de la nervure, dans un état dans lequel le pavé et la nervure sont en contact avec le sol et sont déformés par compression.

3. Bandage pneumatique selon les revendications 1 ou 2, dans lequel un angle formé par chaque rainure à barrettes centrale (22) par rapport à la direction de la largeur du bandage pneumatique, dans une vue en plan de la bande de roulement, est compris dans l'intervalle allant de 45° à 70°, à l'inclusion de 45° et de 70°.

4. Bandage pneumatique selon les revendications 1 ou 2, dans lequel la structure de bande de roulement est symétrique à un point sur le plan équatorial du bandage pneumatique (CL).
